(19) Europäisches Patentamt
European Patent Office
Office européen des brevets

(11) **EP 4 749 452 A1**

(12) **EUROPEAN PATENT APPLICATION**
published in accordance with Art. 153(4) EPC

(43) Date of publication:
**27.05.2026 Bulletin 2026/22**

(51) International Patent Classification (IPC):
***G06F 9/50*** (2006.01)

(21) Application number: **24857632.4**

(22) Date of filing: **19.02.2024**

(52) Cooperative Patent Classification (CPC):
**G06F 9/50; G06F 17/16; G06F 30/20;**
G06F 2111/10

(86) International application number:
**PCT/CN2024/077526**

(87) International publication number:
**WO 2025/044076 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.08.2023 CN 202311082975
07.02.2024 CN 202410178038**

(71) Applicant: **Huawei Cloud Computing
Technologies Co., Ltd.
Gui'an New District, Guizhou 550025 (CN)**

(72) Inventors:
• **KANG, Qingcan**
 **Shenzhen, Guangdong 518129 (CN)**
• **FU, Xiaojin**
 **Shenzhen, Guangdong 518129 (CN)**
• **OU, Bangxiong**
 **Shenzhen, Guangdong 518129 (CN)**
• **HAN, Xiongwei**
 **Shenzhen, Guangdong 518129 (CN)**
• **ZHAO, Cheng**
 **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **DATA PROCESSING METHOD AND APPARATUS, COMPUTING DEVICE CLUSTER, MEDIUM, AND PROGRAM PRODUCT**

(57) Embodiments of this application relate to the field of data processing technologies, and disclose a data processing method and apparatus, a computing device cluster, a medium, and a program product, to improve efficiency of mathematical model construction. The method includes: obtaining a mathematical model expression and an instance data file, where the expression is a target function or a constraint, a sub-expression includes a variable and a coefficient, and instance data indicates a value of a coefficient in each sub-expression of the mathematical model expression; converting the mathematical model expression and the instance data into an original data block, namely, a matrix indicative of the value of the coefficient in each sub-expression of the mathematical model expression; segmenting the original data block into a plurality of sub-data blocks, where data features of the plurality of sub-data blocks meet a similarity threshold, and the data features indicate sparsity or uniformity of the data blocks; and allocating the plurality of sub-data blocks to a plurality of threads for parallel processing, to generate a solver file. In this way, processing efficiency of a solver is improved.

EP 4 749 452 A1

S101: A computing device obtains a mathematical model expression

↓

S102: The computing device obtains an instance data file of parameters

↓

S103: The computing device converts the mathematical model expression and instance data into an original data block → S11: The computing device determines whether the mathematical model expression has a nested structure

↓ ↓

S104: The computing device segments the original data block into a plurality of sub-data blocks

↓

S12: If determining that the mathematical model expression has the nested structure, the computing device performs expression expansion on the mathematical model expression to obtain an expanded model expression

↓

S105: The computing device allocates the plurality of sub-data blocks to a plurality of threads for parallel processing, to generate a solving file

S13: The computing device substitutes the instance data into the expanded mathematical model expression, to obtain the original data block of the mathematical model expression

FIG. 3

## Description

### TECHNICAL FIELD

This application relates to the field of data processing technologies, and in particular, to a data processing method and apparatus, a computing device cluster, a medium, and a program product.

### BACKGROUND

Mathematical programming is a technique for modeling complex actual problems into mathematical problems, and may be widely applied to services for resolving actual problems. Mathematical models corresponding to the mathematical problems may be established by using different mathematical algorithms. Mathematical model expressions used for resolving mathematical programming problems are converted into solver files that can be processed by computing devices, allowing a mathematical programming solver to compute an optimal solution of a mathematical programming model.

Currently, users may input mathematical model expressions constructed based on actual problems into a computing device. The computing device needs to generate a target function expression and expressions of various constraints in the mathematical model expression, and convert the expressions into some content in solver files, and generate a complete solver file, to complete construction of a mathematical programming model. When the constraints in the mathematical model expression are complex and data volume is large, the sequential generation of solver file components is time-consuming, causing low efficiency of the mathematical programming model construction.

### SUMMARY

Embodiments of this application provide a data processing method and apparatus, a computing device cluster, a medium, and a program product, to improve efficiency of mathematical programming model construction.

According to a first aspect, this application provides a data processing method, applied to a mathematical programming solver, where the mathematical programming solver is deployed on a computing device, and the computing device has a plurality of threads. The method includes: obtaining a mathematical model expression and an instance data file, where the mathematical model expression includes at least one sub-expression, the sub-expression is a target function or a constraint, the sub-expression includes a variable and a coefficient, the instance data file includes instance data, and the instance data indicates a value of a coefficient in each sub-expression of the mathematical model expression; converting the mathematical model expression and the instance data into an original data block, where the original data block is a matrix indicative of the value of the coefficient in each sub-expression of the mathematical model expression; and segmenting the original data block into a plurality of sub-data blocks, where data features of the plurality of sub-data blocks meet a similarity threshold, the data features indicate sparsity or uniformity of the data blocks, and the similarity threshold indicates a similarity among the data features of the plurality of sub-data blocks; and allocating the plurality of sub-data blocks to the plurality of threads for parallel processing, to generate a solver file, where the solver file is used for performing a solving operation on the sub-expressions corresponding to the plurality of sub-data blocks, to obtain a solving result of the mathematical model expression.

It may be understood that, the computing device may obtain the mathematical model expression and the instance data file, convert the mathematical model expression and the instance data into the original data block, and may segment the original data block into the plurality sub-data blocks based on the similarity threshold, where the data features of the plurality of sub-data blocks can be ensured to meet the similarity threshold, the plurality of segmented sub-data blocks may be allocated to the plurality of threads for parallel processing, to generate a solver file and complete a process of mathematical model construction, and the solver file may be used for performing the solving operation on the sub-expressions corresponding to the plurality of sub-data blocks, to obtain the solving result of the mathematical model expression. A similarity among the segmented sub-data blocks in sparsity or uniformity value meets the similarity threshold, so that when the sub-data blocks are allocated to the plurality of threads for parallel processing, it is ensured that the solver file is generated by using the plurality of threads in parallel and further ensured that a workload allocated to each thread for processing is uniform, thereby improving efficiency of generating the solver file of the mathematical programming model, and further improving efficiency of mathematical programming model construction.

In a possible implementation, converting the mathematical model expression and the instance data into the original data block includes: converting the mathematical model expression into a form of a mathematical model expression tree; determining that the mathematical model expression tree includes at least one first structure, to determine that the mathematical model expression has a nested structure, where the first structure indicates a structure of a mathematical model expression corresponding to the nested structure; performing expression expansion on the mathematical model expression, to obtain an expanded model expression; and substituting the instance data into the expanded mathematical model expression, to obtain the original data block of the mathematical model expression.

It may be understood that the computing device may convert the mathematical model expression into a form of the mathematical model expression tree, determines whether the mathematical model expression has the nested structure by determining whether the mathematical model expression tree includes the first structure, when determining that the mathematical model expression includes the nested structure, performs expansion on the expression to obtain the expanded model expression, and substitutes the instance data into the expanded mathematical model expression to obtain the original data block, so that the computing device can accurately determine whether the mathematical model expression has the nested structure. Therefore, in a case in which there is a nested structure, the expression is expanded, to help subsequent segmenting of the original data block.

In a possible implementation, performing expression expansion on the mathematical model expression includes: transforming the first structure in the mathematical model expression tree according to a specified rule, to obtain a transformed model expression tree, where the transformed model expression tree is a model expression tree corresponding to the expanded mathematical model expression; and the specified rule is to replace the first structure with a second structure, and the second structure indicates a structure of a mathematical model expression corresponding to an expanded structure of the nested structure.

It may be understood that the first structure may be replaced with the second structure according to the specified rule, to perform structure transformation on the model expression tree. A model expression corresponding to the transformed model expression tree is an expanded model expression. Through the transformation, the computing device may accurately and quickly perform expansion on the nested structure in the model expression, to ensure that the original data block can be successfully segmented subsequently.

In a possible implementation, the data feature includes sparsity, and the method further includes: determining the similarity threshold, where the similarity threshold indicate a similarity among the plurality of sub-data blocks in sparsity; and segmenting the original data block into the plurality of sub-data blocks includes: uniformly segmenting the original data block into the plurality of sub-data blocks based on the similarity threshold, where the similarity among the plurality of sub-data blocks in sparsity meets the similarity threshold.

It may be understood that, in a case in which the data feature includes the sparsity, the computing device may determine the similarity threshold that indicates the similarity among the plurality of sub-data blocks in sparsity, and then segment the original data block into the plurality of sub-data blocks based on the similarity threshold, so that the plurality of segmented sub-data blocks may be similar in sparsity. This ensures that calculation amounts for the threads are balanced when the plurality of sub-data blocks are subsequently allocated to the plurality of threads for processing, and therefore, calculation load balancing of the computing device is ensured.

In a possible implementation, determining the similarity threshold includes: inputting the data features into an optimal threshold selection model, and obtaining the similarity threshold outputted by the optimal threshold selection model; or receiving the similarity threshold inputted by a user.

It may be understood that, in a case, the computing device may input the data features into the optimal threshold selection model, and obtain the similarity threshold outputted by the optimal threshold selection model; or in another case, the computing device may determine the received similarity threshold inputted by the user as the similarity threshold, and obtain an appropriate similarity threshold, to ensure that calculation amounts for the plurality of threads to process sub-data blocks are balanced.

In a possible implementation, the optimal threshold selection model is a neural network model trained by using a data feature of a sample data block and a similarity threshold label, the data feature of the sample data block includes sparsity of the sample data block, and the similarity threshold label is a manually labeled similarity threshold for the sample data block.

It may be understood that the optimal threshold selection model may be a neural network model that undergoes model pre-training. This ensures that an obtained similarity threshold may be adaptive based on the data features, to ensure that calculation amounts for the plurality of threads to process sub-data blocks subsequently are balanced.

In a possible implementation, segmenting the original data block into the plurality of sub-data blocks includes: segmenting the original data block into the plurality of sub-data blocks based on a quantity of threads.

It may be understood that, the segmented sub-data blocks need to be allocated to the plurality of threads, so that the original data block needs to be segmented into the plurality of sub-data blocks based on the quantity of threads in the computing device. This ensures that calculation amounts for the threads are balanced when the plurality of sub-data blocks are subsequently allocated to the threads for processing, to improve model construction efficiency.

In a possible implementation, segmenting the original data block into the plurality of sub-data blocks includes: converting the original data block into a sparse matrix format COO, to obtain a format-converted original data block; and segmenting the format-converted original data block into the plurality of sub-data blocks.

It may be understood that, when the original data block is segmented, the original data block may be first converted into the original data block in the COO format. Values in a first column in the original data block in the COO format are changed according to a rule, to help segment the original data block according to the rule of changing values in the first column.

In a possible implementation, converting the original data block into the sparse matrix format COO, to obtain the format-converted original data block includes: obtaining a quantity of rows and a quantity of columns in the original data block; if a ratio of the quantity of columns to the quantity of rows is greater than a specified threshold, exchanging coordinates of matrix elements in the original data block, to obtain an original data block with the exchanged coordinates; and converting the original data block with the exchanged coordinates into the COO, to obtain the format-converted original data block.

It may be understood that, coordinate processing is performed on the original data block in the COO format, to help segment the original data block subsequently, thereby improving efficiency of model construction.

In a possible implementation, allocating the plurality of sub-data blocks to the plurality of threads for parallel processing, to generate a solver file includes: allocating the plurality of sub-data blocks to the plurality of threads for parallel processing, to generate sub-constraint blocks, where the sub-constraint blocks indicate mapping relationships between the sub-data blocks and sub-expressions as constraints in the mathematical model expression and/or mapping relationships between the sub-data blocks and sub-expressions as target functions in the digital model expression; and splice the sub-constraint blocks to generate the solver file.

It may be understood that, the segmented sub-data blocks are coefficients in the sub-expression, so that each thread needs to generate sub-constraint blocks that indicate mapping relationships between the sub-data blocks and sub-expressions and/or mapping relationships between the sub-data blocks and sub-expressions as target functions in the digital model expression, so that the solver file can splice the sub-constraint blocks to generate a complete solver file, so as to complete a construction process of the mathematical planning model.

In a possible implementation, the data feature includes one of the following: sparsity, a proportion of non-zero elements, a quantity of non-zero elements, a quantity of zero elements, a variance, and a word-embedding mapping value.

In a possible implementation, the mathematical model expression is used for solving one of a factory scheduling problem, a supply-demand simulation problem, and an energy scheduling problem, the instance data is instance data of one of the factory scheduling problem, the supply-demand simulation problem, and the energy scheduling problem, and the solving result is used for guiding resolution of one of the factory scheduling problem, the supply-demand simulation problem, and the energy scheduling problem.

According to a second aspect, an embodiment of this application provides a data processing apparatus. The data processing apparatus is configured to perform any data processing method provided in the first aspect.

In a possible implementation, in this embodiment of this application, the data processing apparatus may be divided into functional modules based on the method provided in the first aspect. For example, each functional module may be obtained through division based on each corresponding function, or two or more functions may be integrated into one processing module. For example, in this embodiment of this application, the data processing apparatus may be divided into an obtaining module, a processing module, a segmenting module, a generating module, and the like based on functions. For descriptions of possible technical solutions performed by the functional modules obtained through division and beneficial effects, refer to the technical solutions provided in the first aspect or the corresponding possible implementations of the first aspect. Details are not described herein again.

According to a third aspect, an embodiment of this application provides a computing device. The computing device includes a processor and a storage, where the processor is coupled to the storage, the storage is configured to store computer instructions, and the computer instructions are loaded and executed by the processor, to cause the computing device to implement the data processing method according to the foregoing aspect.

According to a fourth aspect, an embodiment of this application provides a computing device cluster. The computing device cluster includes at least one computing device, each computing device includes a processor and a storage, and the processor of the at least one computing device is configured to execute instructions stored in the storage of the at least one computing device, to cause the computing device cluster to perform the data processing method provided in the optional implementations of the first aspect.

According to a fifth aspect, an embodiment of this application provides a computer-readable storage medium. The computer-readable storage medium stores at least one computer program instruction, and the computer program instruction is loaded and executed by a processor, to implement the virtual object action generation method according to the foregoing aspect.

According to a sixth aspect, an embodiment of this application provides a computer program product. The computer program product includes computer instructions, and the computer instructions are stored in a computer-readable storage medium. A processor of a computing device reads the computer instructions from the computer-readable storage medium, and the processor executes the computer instructions, so that the computing device cluster performs the data processing method provided in the optional implementations of the first aspect.

For detailed descriptions of the second aspect to the sixth aspect and the implementations of the second aspect to the sixth aspect in this application, refer to detailed descriptions of the first aspect and the implementations of the first aspect. In addition, for beneficial effects of the second aspect to the sixth aspect and the implementations of the second aspect to the sixth aspect, refer to analysis of beneficial effects of the first aspect and the implementations of the first aspect. Details are not described herein again.

These aspects or other aspects in this application are more concise and comprehensible in the following descriptions.

## BRIEF DESCRIPTION OF DRAWINGS

FIG. 1 is a diagram of an application scenario according to an example embodiment;

FIG. 2 is a diagram of a hardware structure of a computing device according to an example embodiment;

FIG. 3 is a schematic flowchart of a data processing method according to an example embodiment;

FIG. 4 is a diagram of a structure of an expression tree according to the embodiment shown in FIG. 3;

FIG. 5 is a diagram of a process of balancing a model expression tree according to the embodiment shown in FIG. 3;

FIG. 6 is a diagram of a process of data processing according to the embodiment shown in FIG. 3;

FIG. 7 is a diagram of a structure of a data processing apparatus according to an example embodiment;

FIG. 8 is a diagram of a computing device according to an example embodiment;

FIG. 9 is a diagram of a computing device cluster according to an example embodiment; and

FIG. 10 is a diagram of a connection manner between computing device clusters according to an example embodiment.

## DESCRIPTION OF EMBODIMENTS

To make objectives, technical solutions, and advantages of this application clearer, the following further describes implementations of this application in detail with reference to the accompanying drawings.

In this specification, "a plurality of" refers to two or more. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

In addition, in the descriptions of this application, unless otherwise specified, "a plurality of" means two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used for representing giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

First, the following describes an example of an application scenario of this embodiment of this application.

A complex actual problem may be modeled into a mathematical problem through mathematical programming, to resolve the actual problem in a manner in which a computing device can solve the mathematical problem. Mathematical modeling may be performed for different actual problems by using different mathematical algorithms, to obtain mathematical models for different actual problems.

Mathematical programming for mathematical modeling and solving can be widely used in the industry, to resolve actual problems such as warehouse stock transfer, port scheduling, and factory emission.

Specifically, a process of performing mathematical programming on an actual problem for modeling and solving may include at least a plurality of steps: collecting data from a service side, compiling a mathematical model, and solving the mathematical model and returning a solution to the service side. The process may be implemented by an algebraic modeling system (algebraic modeling system, AMS).

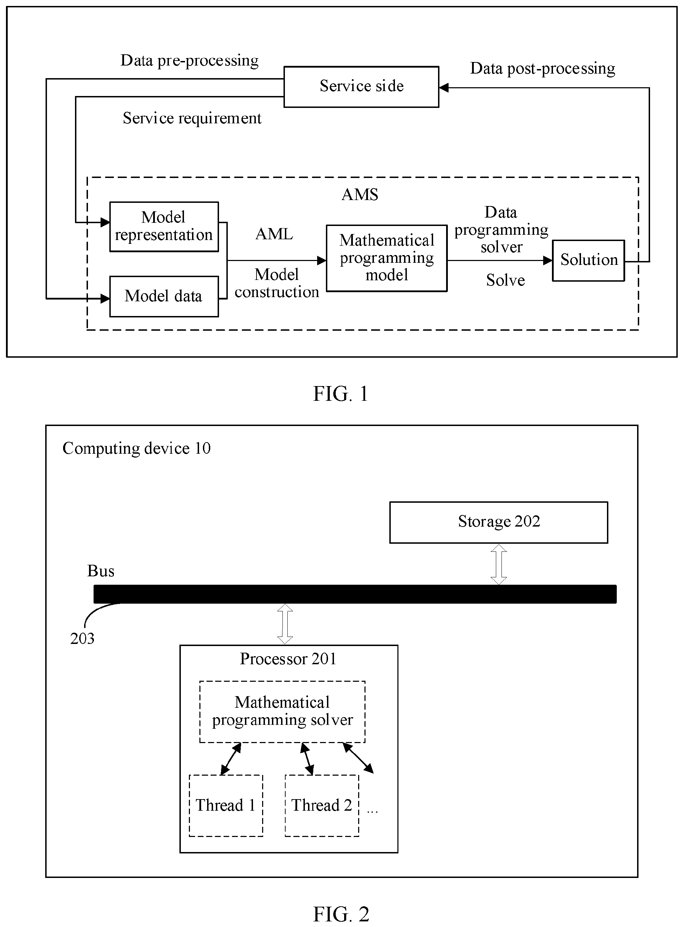

For example, FIG. 1 is a diagram of an architecture of an application scenario according to an example embodiment of this application. As shown in FIG. 1, the architecture may include two parts: a service side and an AMS. The service side proposes a service requirement, and provides a model representation based on the service requirement. The model representation is inputted to the AMS in a form of a mathematical model expression. The AMS may run on a computing device. In addition, the service side may further first perform data pre-processing (for example, data review and data filtering) on service data related to the service requirement, and then inputs pre-processed model data into the AMS. The AMS constructs a model based on the obtained pre-processed model data and model representation by using an algebraic modeling language (algebraic modeling language, AML). To be specific, a mathematical expression is converted into a statement that can be understood by the computing device, to generate a solver file of a mathematical programming model, and then a mathematical programming solver is invoked to run the solver file, so as to solve the constructed mathematical programming model, that is, to perform numerical calculation on the inputted mathematical programming model based on the mathematical programming solver, to obtain an optimal solution. The mathematical programming solver outputs a final numerical result, that is, a solution, and then restores the solution to an actual decision through data post-processing and returns the actual decision to the service side. The data post-processing may be restoring the solution obtained by the mathematical programming solver to an actual decision solution that can be understood by the service side, and analyzing characteristics such as feasibility and robustness of the solution, so that the service side can execute a corresponding decision based on a solution instruction to resolve a service problem and implement a service requirement.

Currently, complexity and a scale of a service scenario of an actual problem increase sharply, causing a mathematical programming problem larger and more complex. Therefore, the AMS needs to be optimized to adapt to a mathematical modeling process of a larger-scale mathematical programming problem.

In a related technology, the AMS constructs a model based on a mathematical model expression and related instance data. In other words, a process of generating a solver file is processed by a single thread of a CPU, that is, the AMS sequentially constructs a complete mathematical programming model by using the single thread of the CPU. Model construction is performed only depending on the single thread, leading to low efficiency of mathematical model construction. This cannot meet a solving scenario in which a mathematical programming problem is increasingly large-scale and complex.

Software used for model construction may include algebraic modeling language software (mathematical programming language, AMPL) or modeling software (OPTVOM).

In view of this, in this embodiment of this application, to implement a process of constructing a mathematical programming model using a plurality of threads in parallel to generate a corresponding solver file, a computing device may obtain a mathematical model expression and instance data, where the mathematical model expression includes a sub-expression of a target function and a sub-expression of a constraint, and each sub-expression may include a variable and a coefficient of the variable; convert the mathematical model expression and the instance data into an original data block that indicates a value of a coefficient of the variable in each sub-expression; determine a similarity threshold of a similarity among data features of a plurality of sub-data blocks; segment the original data block into the plurality of sub-data blocks based on the similarity threshold; and allocate the plurality of sub-data blocks to a plurality of threads for parallel processing, to generate a solver file. This causes the computing device to subsequently parse the solver file by using a solver, and obtain a solving result of the mathematical model expression. The computing device may synchronously generate, by using the plurality of threads in parallel, parts that are of a solver file and that correspond to sub-expressions of a plurality of mathematical model expressions, so that time for generating the solver file is reduced. In addition, when the original data block is segmented, the data features need to be considered, to ensure that the similarity among the data features of the segmented sub-data blocks meets the similarity threshold, so as to ensure that calculation amounts for processing the sub-data blocks subsequently allocated to the threads are balanced, thereby improving efficiency of generating the solver file, that is, improving efficiency of mathematical programming model construction.

FIG. 2 is a diagram of a hardware structure of a computing device 10 according to an embodiment of this application. The computing device 10 may be a server. The server may be a server of an X86 architecture, and may be specifically a blade server, a high-density server, a rack server, a high-performance server, or the like. The computing device 10 may run an AMS. The server includes a processor 201, a storage 202, and a bus 203.

The processor 201 may include one or more processing units. For example, the processor 201 may include an application processor (application processor, AP), a modem processor, and/or a neural-network processing unit (neural-network processing unit, NPU). Different processing units may be independent components, or may be integrated into one or more processors. The processor 201 may run a mathematical programming solver. The mathematical programming solver may be configured to perform an operation on a solver file of a mathematical programming model, to obtain a solving result of a mathematical programming problem corresponding to the mathematical programming model. The processor 201 may include a plurality of threads, including a thread 1 and a thread 2. The plurality of threads may be used in parallel to generate a solver file that is of the mathematical programming model and that is operable with the mathematical programming solver.

The storage 202 is configured to store data. The storage 202 includes, but is not limited to, a random access memory (random access memory, RAM), a read-only memory (read-only memory, ROM), a flash memory, an optical memory, a database, or the like. The storage 202 is configured to interact with the processor 201.

The processor 201 and the storage 202 are usually connected to each other through the bus 203, or are connected to each other in another manner.

It should be noted that the application scenario and the system architecture described in embodiments of this application are intended to describe the technical solutions in embodiments of this application more clearly, and do not constitute a limitation on the technical solutions provided in embodiments of this application. A person of ordinary skill in the art may be aware that, as a system architecture evolves and a new service scenario emerges, the technical solutions provided in embodiments of this application are also applicable to a similar technical problem.

For ease of understanding, the data processing method provided in this application is described below by using an example with reference to the accompanying drawings. The data processing method is applicable to the computing device shown in FIG. 1.

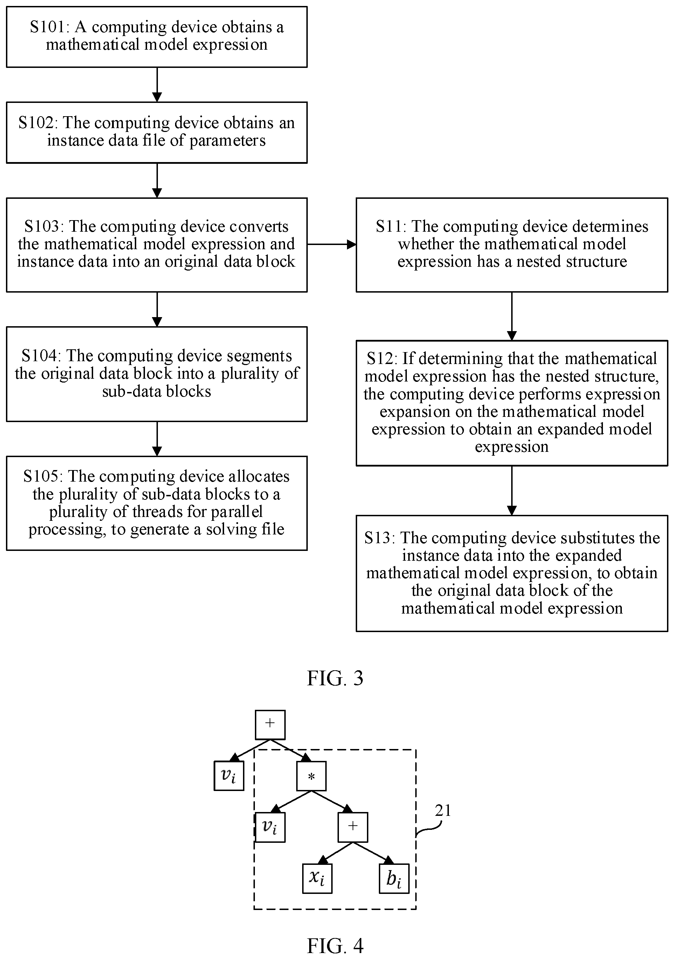

FIG. 3 is a schematic flowchart of a data processing method according to an example embodiment of this application. The data processing method may be executed by a computing device, and the data processing method includes the following steps.

S101: The computing device obtains a mathematical model expression.

In this embodiment of this application, the computing device may receive the mathematical model expression, and the mathematical model expression may be a mathematical model expression for solving a linear programming problem.

In a possible implementation, the computing device uses mathematical programming modeling software (for example, Grassland software or OPTVOM software), to obtain a mathematical model expression uploaded by a user.

In other words, after editing the mathematical model expression, the user may input the mathematical model expression into the mathematical programming modeling software, and the computing device receives the mathematical model expression by using the mathematical programming modeling software.

The mathematical model expression may include a sub-expression of a target function and a sub-expression of a constraint. The mathematical model expression may be used for solving a value of a variable when the target function is an optimal solution in a case of satisfying the constraint. The mathematical model expression may include the variable, and may further include a coefficient. The variable may be a to-be-solved variable, and the coefficient may be a prefix coefficient of the variable in the mathematical model expression, or may be a constant coefficient. In addition, the coefficient in the mathematical model expression may be obtained by substituting instance data into the mathematical model expression.

For example, the mathematical model expression obtained by the computing device may be shown as follows:

$$
\begin{cases}
min \sum_{i=0}^{n-1} b_i x_i \\
s.t. \sum_{i=0}^{n-1} v_i(x_i + b_i) \le 2
\end{cases}
$$

The sub-expression of the target function is $min \sum_{i=0}^{n-1} b_i x_i$, and the sub-expression of the constraint is $s.t. \sum_{i=0}^{n-1} v_i(x_i + b_i) \le 2$. The variable is $x_i$, and coefficients may include $b_i$ and $v_i$. The coefficients, that is, $b_i$ and $v_i$, both have corresponding instance data. When the instance data corresponding to $b_i$ and $v_i$ is substituted into the foregoing mathematical model expression, the value of the variable $x_i$ may be solved when $\sum_{i=0}^{n-1} b_i x_i$ is a minimum value in a case of satisfying the constraint $\sum_{i=0}^{n-1} v_i(x_i + b_i) \le 2$.

S102: The computing device obtains an instance data file.

In this embodiment of this application, the computing device may obtain the instance data file, and time for triggering the computing device to obtain the instance data file and the computing device to obtain the mathematical model expression is not limited herein.

The instance data file includes instance data, and the instance data may indicate a value of a coefficient in each sub-expression of the mathematical model expression.

In a possible implementation, the computing device may also use mathematical programming modeling software (for example, Grassland software or OPTVOM software), to obtain the instance data file uploaded by the user.

In other words, after editing the instance data file, the user may input the instance data file into the mathematical programming modeling software, and the computing device receives the instance data file by using the mathematical programming modeling software.

The instance data may be inputted to the computing device in a form of a two-dimensional data table, for example, an excel table or a dataframe table.

For example, if the coefficients include $b_i$ and $v_i$,

the instance data received by the computing device may be recorded in a form in a table 1.

Table 1

| i | 0 | 1 | 2 | 3 | ... | n-1 |
|---|---|---|---|---|---|---|
| $v_i$ | 3 | 6 | 7 | 0 | ... | 8 |
| $b_i$ | 2 | 1 | 6 | 8 | ... | 7 |

In other words, the computing device may obtain instance data corresponding to $b_i$ and $v_i$ recorded in a form of a two-dimensional data table, for example, an excel table or a dataframe table.

S103: The computing device converts the mathematical model expression and the instance data into an original data block.

The original data block may be a matrix indicative of the value of the coefficient in each sub-expression of the mathematical model expression.

In a possible implementation, the computing device may convert the original data block based on the following steps S11 to S13.

S11: The computing device determines whether the mathematical model expression has a nested structure.

In this embodiment of this application, after obtaining the mathematical model expression, the computing device may determine whether the mathematical model expression includes the nested structure.

That the mathematical model expression has the nested structure means that there is a structure that may be expanded in the mathematical model expression.

In a possible implementation, the computing device transforms the mathematical model expression into a form of a mathematical model expression tree, determines whether the mathematical model expression tree includes a first structure. If the mathematical model expression tree includes the first structure, it is determined that the mathematical model expression has the nested structure; or if the mathematical model expression tree does not include the first structure, it is determined that the mathematical model expression does not have the nested structure.

The first structure may include at least five nodes, where a node representing multiplication is connected to a node representing addition, the node representing multiplication is further connected to a node representing a variable or a constant, and the node representing addition is separately connected to at least two nodes, each representing a variable or a constant.

For example, FIG. 4 is a diagram of a structure of an expression tree according to an embodiment of this application. A form of an expression $v_i + v_i(x_i + b_i)$ transformed into an expression tree is shown in FIG. 4. $v_i(x_i + b_i)$ can be expanded and transformed into $v_i x_i + v_i b_i$, the expression has a single-layer nested structure. However, a computer cannot directly identify whether the expression has the nested structure, so that the expression needs to be transformed into a form of an expression tree. The computing device determines whether a corresponding mathematical model expression has the nested structure by determining whether the expression tree includes a first structure 21. Because the expression tree includes the first structure 21, it may be determined that the mathematical model expression has the nested structure, and the expression needs to be expanded.

S12: If determining that the mathematical model expression has the nested structure, the computing device performs expression expansion on the mathematical model expression to obtain an expanded model expression.

In this embodiment of this application, the computing device may determine, by performing S11, whether the mathematical model expression has the nested structure. If it is determined that the mathematical model expression has the nested structure, the nested structure may be decoupled, to obtain a fully expanded model expression obtained by expanding the mathematical model expression.

In a possible implementation, the computing device transforms, according to a specified rule, the first structure in the model expression tree corresponding to the mathematical model expression, to obtain a transformed model expression tree, where the transformed model expression tree is an expression tree of the mathematical model expression obtained by decoupling and expanding the mathematical model expression.

The specified rule may be to replace the first structure with a second structure, where the second structure may include at least seven nodes. A node representing addition is separately connected to at least two nodes representing multiplication, and each node representing multiplication may be separately connected to two nodes, each representing a variable or a coefficient.

In other words, a process of performing expression on the mathematical model expression is a process of balancing the model expression tree.

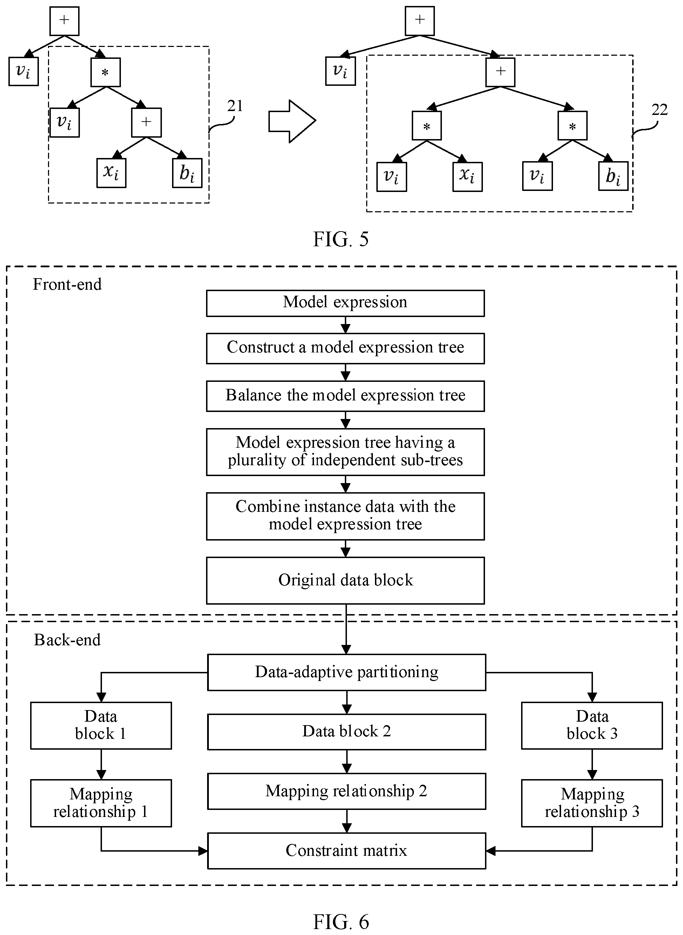

For example, FIG. 5 is a diagram of a process of balancing a model expression tree according to an embodiment of this application. As shown in FIG. 5, in a case in which the model expression tree includes the first structure 21, the model expression tree needs to be balanced, that is, the first structure 21 needs to be transformed according to a specified rule, where the specified rule is to transform the first structure 21 into a second structure 22, and the second structure 22 may represent a model expression obtained by expanding the nested structure in the model expression tree.

S13: The computing device substitutes the instance data into the expanded mathematical model expression, to obtain the original data block of the mathematical model expression.

In this embodiment of this application, after the model expression is expanded, the computing device may substitute the instance data based on a corresponding coefficient, to obtain a mathematical model expression obtained by substituting the instance data, and may generate the original data block based on the mathematical model expression obtained by substituting the instance data.

The original data block may be a matrix indicative of a value of a coefficient in each sub-expression of the mathematical model expression.

Specifically, the mathematical model expression may include a plurality of sub-expressions of constraints. After a sub-expression of each constraint is expanded, each expanded sub-expression of the constraint may include a plurality of meta-expressions, meta-expressions are connected through an addition operation, and each meta-expression includes a variable and a coefficient (that is, a constant value). The original data block may be a matrix used for recording a constant value of the coefficient of each meta-expression.

For example, if the sub-expression of the constraint included in the mathematical model expression includes:

$$\begin{cases} s.t. \sum_{i=0}^{n-1} b_i x_i + v_i(x_i + b_i) \le 10 \\ s.t. \sum_{i=0}^{n-1} v_i(x_i + b_i) \le 2 \\ s.t. \sum_{i=0}^{n-1} b_i(x_i + v_i(x_i + b_i)) \le 17 \end{cases},$$

the computing device may perform S11 and S 12 to expand the sub-expressions of the constraints to obtain a balanced sub-expression tree of each constraint. Expanded sub-expressions of the constraints are shown as follows:

$$\begin{cases} s.t. \sum_{i=0}^{n-1} b_i x_i + v_i x_i + v_i b_i \le 10 \\ s.t. \sum_{i=0}^{n-1} v_i x_i + v_i b_i \le 2 \\ s.t. \sum_{i=0}^{n-1} b_i x_i + b_i v_i x_i + v_i b_i b_i \le 17 \end{cases}.$$

The meta-expressions are connected through addition. After the instance data is substituted, prefix coefficients of variables x corresponding to same values i may be combined for calculation. Therefore, each meta-expression in each expanded sub-expression of the constraint is a variable x that is of each value i and that has a prefix coefficient. For example, if i is 0, 1, or 2, the instance

data includes $b_i = (2,3,6)$ and $v_i = (5,7,2)$, the instance data is substituted into the expanded mathematical model expression, and after combining like terms is performed, the sub-expression of the constraint obtained by substituting the instance data is shown as follows:

$$\begin{cases} s.t. 7x_0 + 10x_1 + 8x_2 \le -33 \\ s.t. 5x_0 + 7x_1 + 2x_2 \le -41 \\ s.t. 12x_0 + 24x_1 + 18x_2 \le -138 \end{cases}.$$

After the foregoing processing, a coefficient (that is, a constant value) of each meta-expression of each constraint may be obtained, and a corresponding original data block may be obtained as follows:

$$\begin{pmatrix} 7 & 10 & 8 \\ 5 & 7 & 2 \\ 12 & 24 & 18 \end{pmatrix}.$$

S104: The computing device segments the original data block into a plurality of sub-data blocks.

Data features of the plurality of sub-data blocks meet a similarity threshold, the data features may indicate sparsity or uniformity of the data blocks, and the similarity threshold may indicate a similarity among the data features of the plurality of sub-data blocks.

In a possible implementation, the computing device determines the similarity threshold, and then segments the original data block into the plurality of sub-data blocks based on the similarity threshold.

In this embodiment of this application, after determining the similarity threshold, the computing device may uniformly segment the original data block into the plurality of sub-data blocks based on the similarity threshold.

The similarity threshold may indicate a granularity of segmenting the original data block.

In a possible implementation, the computing device may determine the similarity threshold through a similarity threshold selection procedure. Specifically, the similarity threshold may be determined in at least the following two manners.

(1) The similarity threshold selection procedure may include: The user directly inputs a needed similarity threshold to the computing device.

That is, the user may input, as needed, a degree of segmenting format-converted original data block. For example, for the similarity threshold, the user may input a quantity of sub-data blocks obtained by segment the format-converted original data block, or a quantity of rows that each data block needs to include.

For example, if the user needs to segment the original data block into five sub-data blocks, the user may input a similarity threshold of five. When the computing device determines that the similarity threshold is five, if the format-converted original data block is a 3*9 matrix, the format-converted original data block may be segmented by using two rows as a sub-data block, to obtain five sub-data blocks.

(2) The similarity threshold selection procedure may include: The computing device obtains a similarity threshold outputted by the optimal threshold selection model by inputting the data features into the optimal threshold selection model.

The data feature of the original data block may include at least one of uniformity or sparsity of the original data block, where the uniformity may indicate uniformity of data in a data block, and the sparsity may indicate a proportion of null values in a data block.

In a possible implementation, the data feature may include one of the following: sparsity, a proportion of non-zero elements, a quantity of non-zero elements, a quantity of zero elements, a variance, and a word-embedding mapping value.

Optionally, the computing device may determine the similarity threshold based on the data feature of the original data block and a quantity of threads of the computing device.

Specifically, the computing device may use the data feature of the original data block and the quantity of threads of the computing device as input data, and input the input data to the optimal threshold selection model, and the computing device may obtain the similarity threshold outputted by the optimal threshold selection model.

The optimal threshold selection model may be a neural network model. For example, the optimal threshold selection model may be a multi-layer perceptron (multi-layer perceptron, MLP).

In a possible implementation, a training device inputs a data feature sample of the original data block and a thread quantity sample of the computing device into the optimal threshold selection model, determines a loss function based on the similarity threshold and a similarity threshold label that are outputted by the optimal threshold selection model, trains the optimal threshold selection model based on the loss function, updates a model parameter, and finally obtains a trained optimal threshold selection model. A data feature of a sample data block may include sparsity of the sample data block, and a similarity threshold label is a manually labeled similarity threshold for the sample data block.

For example, the computing device may extract the data feature of the original data block. If the data feature of the original data block includes that the original data block has a dimension of 2 and sparsity of 0, and a quantity of threads of the computing device is 4, the data feature and the quantity of threads are inputted to the trained optimal threshold selection model, and a similarity threshold obtained through calculation is outputted by the trained optimal threshold selection model. For example, the similarity threshold may indicate that the format-converted original data block is to be segmented by using two rows as one sub-data block.

Calculation amounts for threads to calculate sub-expressions corresponding to data blocks of a same size vary with dimensions of variables corresponding to the data blocks of the same size. Specifically, larger dimension values of the variables indicate greater calculation amounts for the threads to calculate the sub-expressions corresponding to the data blocks of the same size. Therefore, to ensure that calculation amounts for sub-expressions corresponding to sub-data blocks allocated to the threads are balanced, it is ensured as far as possible that the threads calculate, in parallel, the sub-expressions corresponding to the sub-data blocks, to achieve an objective of improving efficiency of solving a model expression subsequently.

For example, if the variable is $x_i$, each corresponding segmented sub-data block is a 2*3 matrix, and subsequently, the computing device uniformly allocates, to each thread, a calculation task corresponding to each sub-data block. Similarly, if the variable is $x_{ij}$, each corresponding segmented sub-data block is a 2*3 matrix, and subsequently, the computing device uniformly allocates, to each thread, a calculation task corresponding to each sub-data block. Sizes of the sub-data blocks in the foregoing two cases are the same. However, dimensions of variables in corresponding calculation tasks are different. As a result, a calculation amount for a thread to actually process a calculation task corresponding to $x_i$ is less than a calculation amount for processing a calculation task corresponding to $x_{ij}$. Therefore, the dimensions of the variables may be used as one of sample labels for training the neural network model.

Similarly, sparsity of the data blocks of the same size varies with calculation amounts for threads to calculate sub-expressions corresponding to the data blocks of the same size. The sparsity may indicate a quantity of null values in a data block. In other words, in a case in which two sub-data blocks of a same size need to be respectively allocated to threads for computing respective sub-expressions, a calculation amount for the thread to calculate a sub-expression corresponding to a sub-data block with larger sparsity is smaller. Therefore, to ensure that calculation amounts for sub-expressions corresponding to sub-data blocks allocated to the threads are balanced, it is ensured as far as possible that the threads calculate, in parallel, the sub-expressions corresponding to the sub-data blocks, to achieve an objective of improving efficiency of solving a model expression subsequently.

For example, if each segmented sub-data block is a 2*3 matrix, sparsity corresponding to a 1st sub-data block is greater than sparsity corresponding to a 2nd sub-data block, that is, a quantity of null values in the 1st sub-data block is greater than a quantity of null values in the 2nd sub-data block. In the foregoing case, if a size of the 1st sub-data block is the same as a size of the 2nd sub-data block, but corresponding sparsity is different, a calculation amount for the thread to actually process a calculation task corresponding to the 1st sub-data block is less than a calculation amount for processing a calculation task corresponding to the 2nd sub-data block. Therefore, the sparsity of the data block may also be used as one of the sample labels for training the neural network model.

In addition, to uniformly allocate the sub-data blocks to the threads of the computing device, the computing device may subsequently operate, by using the threads in parallel, a calculation task corresponding to each sub-data block, to achieve an objective of improving computing efficiency. Therefore, a quantity of threads of the computing device may also be used as one of the sample labels for training the neural network model.

After determining the similarity threshold through the similarity threshold selection procedure, the computing device may perform format conversion on the original data block, to generate the format-converted original data block.

In a possible implementation, after an original data block with a constraint is obtained, the original data block may be converted into a sparse matrix format (coordinate list, COO), to obtain a format-converted original data block.

For example, the original data block is as follows:

$$\begin{pmatrix} 7 & 10 & 8 \\ 5 & 7 & 2 \\ 12 & 24 & 18 \end{pmatrix}.$$

The format-converted original data block may be the following matrix:

$$\begin{pmatrix} 0 & 0 & 7 \\ 0 & 1 & 10 \\ 0 & 2 & 8 \\ 1 & 0 & 5 \\ 1 & 1 & 7 \\ 1 & 2 & 2 \\ 2 & 0 & 12 \\ 2 & 1 & 24 \\ 2 & 2 & 18 \end{pmatrix}.$$

Each row of the format-converted original data block indicates a location of each matrix element in the original data block in the matrix and a value of each matrix element, a value in a first column indicates a row to which a matrix element belongs in the original data block, a value in a second column indicates a column to which a corresponding matrix element belongs in the original data block, and a value in a third column is a value of a corresponding matrix element in the original data block.

In a possible implementation, the computing device obtains a quantity of rows and a quantity of columns in the original data block; if a ratio of the quantity of columns to the quantity of rows is greater than a specified threshold, exchanges coordinates of matrix elements in the matrix of the original data block, to obtain an original data block with the exchanged coordinates; and converts the original data block with the exchanged coordinates into a COO format, to obtain the format-converted original data block.

The quantity of rows of the original data block may be far less than the quantity of columns, so that the ratio of the quantity of rows to the quantity of columns is greater than the specified threshold. In the foregoing case, if the original data block is directly converted into the COO format, the quantity of rows with same values in the first column of the matrix in the COO format is large. As a result, if the computing device performs data block segmentation based on value jump locations in the first column, each segmented sub-data block is large, affecting an effect of subsequently allocating the sub-data blocks to the threads to execute calculation tasks.

For example, the original data block is as follows:

$$\begin{pmatrix} 7 & 10 & 8 & 9 & 5 & 3 \\ 5 & 7 & 2 & 1 & 2 & 8 \\ 12 & 24 & 18 & 6 & 3 & 7 \end{pmatrix}.$$

The ratio of the quantity of columns to the quantity of rows is 2. If the specified threshold is 1, it may be determined that the ratio of the quantity of columns to the quantity of rows is greater than the specified threshold. Therefore, coordinates of the matrix elements in the original data block need to be exchanged, to obtain an original data block with the exchanged coordinates, as shown in the following:

$$\begin{pmatrix} 7 & 5 & 12 \\ 10 & 7 & 24 \\ 8 & 2 & 18 \\ 9 & 1 & 6 \\ 5 & 2 & 3 \\ 3 & 8 & 7 \end{pmatrix}.$$

Then, the computing device may convert, into the COO format, the original data block with the exchanged coordinates, and obtain a format-converted original data block, as shown in the following:

$$\begin{pmatrix} 0 & 0 & 7 \\ 0 & 1 & 5 \\ 0 & 2 & 12 \\ 1 & 0 & 10 \\ 1 & 1 & 7 \\ 1 & 2 & 24 \\ 2 & 0 & 8 \\ 2 & 1 & 2 \\ 2 & 2 & 18 \\ 3 & 0 & 9 \\ 3 & 1 & 1 \\ 3 & 2 & 6 \\ 4 & 0 & 5 \\ 4 & 1 & 2 \\ 4 & 2 & 3 \\ 5 & 0 & 3 \\ 5 & 1 & 8 \\ 5 & 2 & 7 \end{pmatrix}.$$

If the similarity threshold is 3, segmentation may be performed based on value converted locations in the first column, to obtain six 3*3 segmented sub-data blocks. If the computing device has three threads, two sub-data blocks may be uniformly allocated to each thread subsequently to perform parallel computing on corresponding calculation tasks.

S105: The computing device allocates the plurality of sub-data blocks to a plurality of threads for parallel processing, to generate a solver file.

The solver file is used for performing a solving operation on sub-expressions corresponding to the plurality of sub-data blocks, to obtain a solving result of the mathematical model expression.

In a possible implementation, the computing device may allocate the plurality of sub-data blocks to the plurality of threads for parallel processing, to generate sub-constraint blocks, and splice the sub-constraint blocks to generate the solver file.

In this embodiment of this application, the computing device may generate the corresponding sub-constraint blocks based on the sub-data blocks by using the plurality of threads in parallel. The sub-constraint blocks may indicate mapping relationships between the sub-data blocks and sub-expressions as constraints in the mathematical model expression and mapping relationships between the sub-data blocks and/or sub-expressions as target functions in the digital model expression, and the sub-constraint blocks are spliced to generate a complete solver file.

The solver file may be a file that is identifiable by a mathematical programming solver of the computing device and that is used for solving an optimal solution of a variable in the mathematical model expression. The solver file may be an LP file or an MPS file.

In a possible implementation, the mathematical model expression may be used for solving one of a factory scheduling problem, a supply-demand simulation problem, and an energy scheduling problem, the instance data may be instance data of one of the factory scheduling problem, the supply-demand simulation problem, and the energy scheduling problem, and the solving result may be used for guiding resolution of one of the factory scheduling problem, the supply-demand simulation problem, and the energy scheduling problem.

In other words, this application may be applied to resolve at least one of the factory scheduling problem, the supply-demand simulation problem, or the energy scheduling problem. For these actual problems, a mathematical programming model is constructed.

For example, FIG. 6 is a schematic flowchart of a mathematical programming model construction process according to an embodiment of this application. As shown in FIG. 6, on each CPU, a data block may be converted into a constraint block through a processing of two stages: model expression tree balancing and data-adaptive partitioning. The process may include three core apparatuses: a symbol allocator, a data partitioner, and an iterator. The symbol allocator located at a front-end of OPTVOM software can transform a mathematical model expression into a model expression tree, and then balance the model expression tree to obtain a model expression tree with several independent sub-trees. An original data block may be generated by combining instance data with the model expression tree. The data partitioner located at a back-end may perform data-adaptive partition on the original data block, and segment the original data block into a data block 1, a data block 2, a data block 3, and the like. The segmented data blocks are allocated to threads respectively, and the threads may traverse the data blocks by using the iterator and establish mapping relationships between variables in the data blocks and constraints. For example, a thread 1 to which the data block 1 is allocated may traverse the data block 1 and establish a mapping relationship 1 between a variable in the data block 1 and a constraint; a thread 2 to which the data block 2 is allocated may traverse the data block 2 and establish a mapping relationship 2 between a variable in the data block 2 and a constraint; and a thread 3 to which the data block 3 is allocated may traverse the data block 3 and establish a mapping relationship 3 between a variable in the data block 3 and a constraint. Then, a constraint block 1, a constraint block 2, a constraint block 3, and the like are generated and spliced to obtain a constraint matrix, so as to obtain a solver file.

In conclusion, the computing device may obtain the mathematical model expression and the instance data file, convert the mathematical model expression and the instance data into the original data block, and may segment the original data block into the plurality sub-data blocks based on the similarity threshold, where the data features of the plurality of sub-data blocks can be ensured to meet the similarity threshold, the plurality of segmented sub-data blocks may be allocated to the plurality of threads for parallel processing, to generate a solver file and complete a process of mathematical model construction, and the solver file may be used for performing the solving operation on the sub-expressions corresponding to the plurality of sub-data blocks, to obtain the solving result of the mathematical model expression. A similarity among the segmented sub-data blocks in sparsity or uniformity value meets the similarity threshold, so that when the sub-data blocks are allocated to the plurality of threads for parallel processing, it is ensured that the solver file is generated by using the plurality of threads in parallel and further ensured that a workload allocated to each thread for processing is uniform, thereby improving efficiency of generating the solver file of the mathematical programming model, and further improving efficiency of mathematical programming model construction.

The foregoing mainly describes solutions in embodiments of this application from a method perspective. It may be understood that, to implement the foregoing functions, the data processing apparatus includes at least one of a hardware structure and a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional units may be performed on a data processing apparatus based on the foregoing method examples. For example, each functional unit may be obtained through division based on each corresponding function, or two or more functions may be integrated into one processing unit. The integrated unit may be implemented in a form of hardware, or may be implemented in a form of a software functional unit. It should be noted that, in this embodiment of this application, division into the units is an example, and is merely a logical function division. In an actual implementation, another division manner may be used.

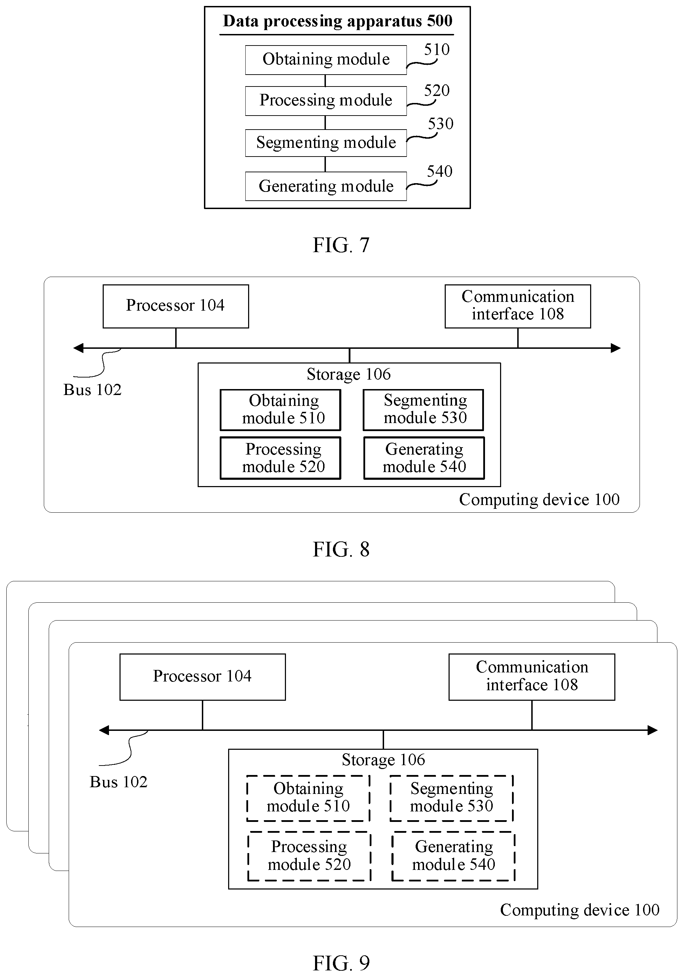

For example, FIG. 7 is a diagram of a structure of a data processing apparatus 500 according to an example embodiment of this application. The data processing apparatus 500 is used in a computing device, or the data processing apparatus 500 may be a computing device. The data processing apparatus 500 includes:

an obtaining module 510, configured to obtain a mathematical model expression and an instance data file, where the mathematical model expression includes at least one sub-expression, the sub-expression is a target function or a constraint, the sub-expression includes a variable and a coefficient, the instance data file includes instance data, and the instance data indicates a value of a coefficient in each sub-expression of the mathematical model expression;

a processing module 520, configured to convert the mathematical model expression and the instance data into an original data block, where the original data block is a matrix indicative of the value of the coefficient in each sub-expression of the mathematical model expression;

a segmenting module 530, configured to segment the original data block into a plurality of sub-data blocks, where data features of the plurality of sub-data blocks meet a similarity threshold, the data features indicate sparsity or uniformity of the data blocks, and the similarity threshold indicates a similarity among the data features of the plurality of sub-data blocks; and

a generating module 540, configured to allocate the plurality of sub-data blocks to a plurality of threads for parallel processing, to generate a solver file, where the solver file is used for performing a solving operation on sub-expressions corresponding to the plurality of sub-data blocks, to obtain a solving result of the mathematical model expression.

For example, with reference to FIG. 3, the obtaining module 510 may be configured to perform S101 and S102 shown in FIG. 3, the processing module 520 may be configured to perform S103 shown in FIG. 3, the segmenting module 530 may be configured to perform S104 shown in FIG. 3, and the generating module 540 may be configured to perform S105 shown in FIG. 3.

In a possible implementation, the processing module 520 is further configured to: convert the mathematical model expression into a form of a mathematical model expression tree; determine that the mathematical model expression tree includes at least one first structure, to determine that the mathematical model expression has a nested structure, where the first structure indicates a structure of a mathematical model expression corresponding to the nested structure; perform expression expansion on the mathematical model expression, to obtain an expanded model expression; and substitute the instance data into the expanded mathematical model expression, to obtain the original data block of the mathematical model expression.

In a possible implementation, the processing module 520 is further configured to transform the first structure in the mathematical model expression tree according to a specified rule, to obtain a transformed model expression tree, where the transformed model expression tree is a model expression tree corresponding to the expanded mathematical model expression; and the specified rule is to replace the first structure with a second structure, and the second structure indicates a structure of a mathematical model expression corresponding to an expanded structure of the nested structure.

In a possible implementation, the data feature includes sparsity, and the apparatus further includes:

a determining module, configured to determine the similarity threshold, where the similarity threshold indicates a similarity among the plurality of sub-data blocks in sparsity; and
the processing module 520, further configured to uniformly segment the original data block into the plurality of sub-data blocks based on the similarity threshold, where the similarity among the plurality of sub-data blocks in sparsity meets the similarity threshold.

In a possible implementation, the determining module is further configured to: input the data features into an optimal threshold selection model, and obtain the similarity threshold outputted by the optimal threshold selection model; or receive the similarity threshold inputted by a user.

In a possible implementation, the optimal threshold selection model is a neural network model trained by using a data feature of a sample data block and a similarity threshold label, the data feature of the sample data block includes sparsity of the sample data block, and the similarity threshold label is a manually labeled similarity threshold for the sample data block.

In a possible implementation, the processing module 520 is further configured to: convert the original data block into a sparse matrix format COO, to obtain a format-converted original data block; and segment the format-converted original data block into the plurality of sub-data blocks.

In a possible implementation, the generating module 540 is further configured to: allocate the plurality of sub-data blocks to the plurality of threads for parallel processing, to generate sub-constraint blocks, where the sub-constraint blocks indicate mapping relationships between the sub-data blocks and sub-expressions as constraints in the mathematical model expression and/or mapping relationships between the sub-data blocks and sub-expressions as target functions in the digital model expression; and splice the sub-constraint blocks to generate the solver file.

In a possible implementation, the data feature includes one of the following: sparsity, a proportion of non-zero elements, a quantity of non-zero elements, a quantity of zero elements, a variance, and a word-embedding mapping value.

In a possible implementation, the mathematical model expression is used for solving one of a factory scheduling problem, a supply-demand simulation problem, and an energy scheduling problem, the instance data is instance data of one of the factory scheduling problem, the supply-demand simulation problem, and the energy scheduling problem, and the solving result is used for guiding resolution of one of the factory scheduling problem, the supply-demand simulation problem, and the energy scheduling problem.

For detailed descriptions of the foregoing optional manners, refer to the foregoing method embodiments. Details are not described herein again. In addition, for descriptions of any explanation and beneficial effect of the data processing apparatus provided above, refer to the foregoing corresponding method embodiments. Details are not described again.

The obtaining module 510, the processing module 520, the segmenting module 530, and the generating module 540 may all be implemented by using software or hardware. For example, the following uses the obtaining module 510 as an example to describe an implementation of the obtaining module 510. Similarly, for implementations of the processing module 520, the segmenting module 530, and the generating module 540, refer to the implementation of the obtaining module 510.

A module is used as an example of a software functional unit, and the obtaining module 510 may include code run on a computing instance. The computing instance may include at least one of a physical host (computing device), a virtual machine, and a container. Further, there may be one or more computing instances. For example, the obtaining module 510 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. Generally, one VPC is disposed in one region. A communication gateway needs to be disposed in each VPC for communication between two VPCs in a same region and cross-region communication between VPCs in different regions. The VPCs are interconnected through the communication gateway.

A module is used as an example of a hardware functional unit, and the obtaining module 510 may include at least one computing device, for example, a server. Alternatively, the obtaining module 510 may be a device implemented by using an application-specific integrated circuit (application-specific integrated circuit, ASIC) or a programmable logic device (programmable logic device, PLD), or the like. The PLD may be implemented by using a complex programmable logical device (complex programmable logical device, CPLD), a field-programmable gate array (field-programmable gate array, FPGA), a generic array logic (generic array logic, GAL), or any combination thereof.

A plurality of computing devices included in the obtaining module 510 may be distributed in a same region, or may be distributed in different regions. The plurality of computing devices included in the obtaining module 510 may be distributed in a same AZ, or may be distributed in different AZs. Similarly, the plurality of computing devices included in the obtaining module 510 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in another embodiment, the obtaining module 510 may be configured to perform any step in the data processing method, the processing module 520 may be configured to perform any step in the data processing method, the segmenting module 530 may be configured to perform any step in the data processing method, the generating module 540 may be configured to perform any step in the data processing method, steps implemented by the obtaining module 510, the processing module 520, the segmenting module 530, and the generating module 540 may be specified as required, and the obtaining module 510, the processing module 520, the segmenting module 530, and the generating module 540 respectively implement different steps in the data processing method to implement all functions of the data processing apparatus. This application further provides a computing device 100. As shown in FIG. 8, the computing device 100 includes a bus 102, a processor 104, a storage 106, and a communication interface 108. The processor 104, the storage 106, and the communication interface 108 communicate with each other through the bus 102. The computing device 100 may be a server or a terminal device. It should be understood that quantities of processors and storages in the computing device 100 are not limited in this application.

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 8, but this does not indicate that there is only one bus or only one type of bus. The bus 104 may include a path for transferring information between various components (for example, the storage 106, the processor 104, and the communication interface 108) of the computing device 100.

The processor 104 may include any one or more of processors, such as a central processing unit (central processing unit, CPU), a graphics processing unit (graphics processing unit, GPU), a microprocessor (microprocessor, MP), or a digital signal processor (digital signal processor, DSP).

The storage 106 may include a volatile memory (volatile memory), for example, a random access memory (random access memory, RAM). The processor 104 may further include a non-volatile memory (non-volatile memory), for example, a read-only memory (read-only memory, ROM), a flash memory, a hard disk drive (hard disk drive, HDD), or a solid-state drive (solid-state drive, SSD).

The storage 106 stores executable program code, and the processor 104 executes the executable program code to separately implement functions of the obtaining module 510, the processing module 520, the segmenting module 530, and the generating module 540, so as to implement the data processing method. In other words, the storage 106 stores instructions used for performing the data processing method.

Alternatively, the storage 106 stores executable code, and the processor 104 executes the executable code to separately implement functions of the foregoing data processing apparatus, so as to implement the data processing method. In other words, the storage 106 stores instructions used for performing the data processing method.

The communication interface 108 uses a transceiver module, for example but not limited to, a network interface card or a transceiver, to implement communication between the computing device 100 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 9, the computing device cluster includes at least one computing device 100. A storage 106 in one or more computing devices 100 in the computing device cluster may store same instructions used for performing the data processing method.

Alternatively, in some possible implementations, the storages 106 in the one or more computing devices 100 in the computing device cluster may respectively store some instructions used for performing the data processing method. In other words, a combination of the one or more computing devices 100 may jointly execute the instructions used for performing the data processing method.

It should be noted that storages 106 in different computing devices 100 in the computing device cluster may store different instructions respectively used for performing some functions of the data processing apparatus. In other words, instructions stored in the storages 106 in different computing devices 100 may implement functions of one or more of the obtaining module 510, the processing module 520, the segmenting module 530, and the generating module 540.

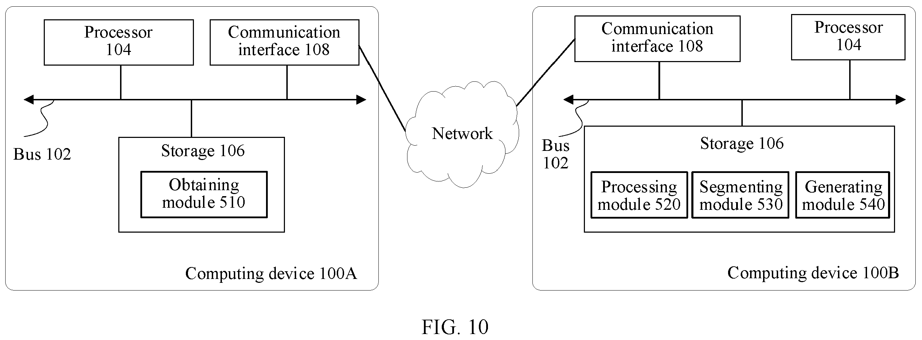

In some possible implementations, the one or more computing devices in the computing device cluster may be connected through a network. The network may be a wide area network, a local area network, or the like. FIG. 10 shows a possible implementation. As shown in FIG. 10, two computing devices 100A and 100B are connected through a network. Specifically, each computing device is connected to the network through a communication interface in the computing device. In this type of possible implementation, a storage 106 in the computing device 100A stores instructions used for performing a function of the obtaining module 510. In addition, a storage 106 in the computing device 100B stores instructions for used performing functions of the processing module 520, the segmenting module 530, and the generating module 540.

A connection manner between computing device clusters shown in FIG. 10 may be that, in consideration of the data processing method provided in this application in which extensive data storage and computation needs to be performed, it is considered that functions implemented by the processing module 520, the segmenting module 530, and the generating module 540 are performed by the computing device 100B.

It should be understood that functions of the computing device 100A shown in FIG. 10 may be alternatively performed by a plurality of computing devices 100. Similarly, functions of the computing device 100B may alternatively be performed by the plurality of computing devices 100.

An embodiment of this application further provides another computing device cluster. For a connection relationship between computing devices in the computing device cluster, refer to the connection manners of the computing device cluster in FIG. 8 and FIG. 9 similarly. A difference lies in that storages 106 in one or more computing devices 100 in the computing device cluster may store same instructions used for performing the data processing method.

Alternatively, in some possible implementations, the storages 106 in the one or more computing devices 100 in the computing device cluster may respectively store some instructions used for performing the data processing method. In other words, a combination of the one or more computing devices 100 may jointly execute the instructions used for performing the data processing method.

It should be noted that storages 106 in different computing devices 100 in the computing device cluster may store different instructions used for performing some functions of the data processing system. In other words, the instructions stored in the storages 106 in the different computing devices 100 may implement functions of one or more apparatuses in the data processing apparatus.

An embodiment of this application further provides a computer program product including instructions. The computer program product may be software or a program product that includes instructions and that can run on a computing device or be stored in any usable medium. When the computer program product runs on at least one computing device, the at least one computing device is caused to perform the data processing method.

Embodiments of this application further provide a computer-readable storage medium. The computer-readable storage medium may be any usable medium that can be stored by a computing device, or a data storage device like a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. The instructions instruct the computing device to perform the data processing method, or instruct the computing device to perform the data processing method.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that modifications may still be made to the technical solutions described in the foregoing embodiments or equivalent replacements may be made to some technical features thereof. Such modifications or equivalent replacements do not cause the essence of the corresponding technical solutions to depart from the protection scope of the technical solutions in embodiments of the present invention.

## Claims

1. A data processing method, applied to a mathematical programming solver, wherein the mathematical programming solver is deployed on a computing device, and the method comprises:

   obtaining a mathematical model expression and an instance data file, wherein the mathematical model expression comprises at least one sub-expression, the sub-expression is a target function or a constraint, the sub-expression comprises a variable and a coefficient, the instance data file comprises instance data, and the instance data indicates a value of the coefficient in each sub-expression of the mathematical model expression;
   converting the mathematical model expression and the instance data into an original data block, wherein the original data block is a matrix indicative of the value of the coefficient in each sub-expression of the mathematical model expression;

segmenting the original data block into a plurality of sub-data blocks, wherein data features of the plurality of sub-data blocks meet a similarity threshold, the data features indicate sparsity or uniformity of the data blocks, and the similarity threshold indicates a similarity among the data features of the plurality of sub-data blocks; and allocating the plurality of sub-data blocks to a plurality of threads for parallel processing, to generate a solver file, wherein the solver file is used for performing a solving operation on sub-expressions corresponding to the plurality of sub-data blocks, to obtain a solving result of the mathematical model expression.

2. The method according to claim 1, wherein the converting the mathematical model expression and the instance data into the original data block comprises:

converting the mathematical model expression into a form of a mathematical model expression tree;

determining that the mathematical model expression tree comprises at least one first structure, to determine that the mathematical model expression has a nested structure, wherein the first structure indicates a structure of a mathematical model expression corresponding to the nested structure;

performing expression expansion on the mathematical model expression, to obtain an expanded model expression; and

substituting the instance data into the expanded mathematical model expression, to obtain the original data block of the mathematical model expression.

3. The method according to claim 2, wherein the performing expression expansion on the mathematical model expression comprises:

transforming the first structure in the mathematical model expression tree according to a specified rule, to obtain a transformed model expression tree, wherein the transformed model expression tree is a model expression tree corresponding to the expanded mathematical model expression, wherein the specified rule is to replace the first structure with a second structure, and the second structure indicates a structure of a mathematical model expression corresponding to an expanded structure of the nested structure.

4. The method according to any one of claims 1 to 3, wherein the data feature comprises sparsity, and the method further comprises:

determining the similarity threshold, wherein the similarity threshold indicates a similarity among the plurality of sub-data blocks in sparsity; and the segmenting the original data block into the plurality of sub-data blocks comprises:

uniformly segmenting the original data block into the plurality of sub-data blocks based on the similarity threshold, wherein the similarity among the plurality of sub-data blocks in sparsity meets the similarity threshold.

5. The method according to claim 4, wherein the determining the similarity threshold comprises:

inputting the data features in an optimal threshold selection model, and obtaining the similarity threshold outputted by the optimal threshold selection model; or

receiving the similarity threshold inputted by a user.

6. The method according to claim 5, wherein the optimal threshold selection model is a neural network model trained by using a data feature of a sample data block and a similarity threshold label, the data feature of the sample data block comprises sparsity of the sample data block, and the similarity threshold label is a manually labeled similarity threshold for the sample data block.

7. The method according to any one of claims 1 to 6, wherein the segmenting the original data block into the plurality of sub-data blocks comprises:

converting the original data block into a sparse matrix format COO, to obtain a format-converted original data block; and

segmenting the format-converted original data block into the plurality of sub-data blocks.

8. The method according to any one of claims 1 to 7, wherein the allocating the plurality of sub-data blocks to the plurality of threads for parallel processing, to generate the solver file comprises:

allocating the plurality of sub-data blocks to the plurality of threads for parallel processing, to generate sub-constraint blocks, wherein the sub-constraint blocks indicate mapping relationships between the sub-data blocks and sub-expressions as constraints in the mathematical model expression and/or mapping relationships between the sub-data blocks and sub-expressions as target functions in the digital model expression; and

splicing the sub-constraint blocks to generate the solver file.

9. The method according to any one of claims 1 to 8, wherein the data feature comprises one of the following: sparsity, a proportion of non-zero elements, a quantity of non-zero elements, a quantity of zero elements, a matrix variance, and a word-embedding mapping value.

10. The method according to any one of claims 1 to 9, wherein the mathematical model expression is used for solving one of a factory scheduling problem, a supply-demand simulation problem, and an energy scheduling problem, the instance data is instance data of one of the factory scheduling problem, the supply-demand simulation problem, and the energy scheduling problem, and the solving result is used for guiding resolution of one of the factory scheduling problem, the supply-demand simulation problem, and the energy scheduling problem.

11. A data processing apparatus, used in a mathematical programming solver, wherein the mathematical programming solver is deployed on a computing device, the computing device has a plurality of threads, and the apparatus comprises:

an obtaining module, configured to obtain a mathematical model expression and an instance data file, wherein the mathematical model expression comprises at least one sub-expression, the sub-expression is a target function or a constraint, the sub-expression comprises a variable and a coefficient, the instance data file comprises instance data, and the instance data indicates a value of the coefficient in each sub-expression of the mathematical model expression;
a processing module, configured to convert the mathematical model expression and the instance data into an original data block, wherein the original data block is a matrix indicative of the value of the coefficient in each sub-expression of the mathematical model expression;
a segmenting module, configured to segment the original data block into a plurality of sub-data blocks, wherein data features of the plurality of sub-data blocks meet a similarity threshold, the data features indicate sparsity or uniformity of the data blocks, and the similarity threshold indicates a similarity among the data features of the plurality of sub-data blocks; and
a generating module, configured to allocate the plurality of sub-data blocks to the plurality of threads for parallel processing, to generate a solver file, wherein the solver file is used for performing a solving operation on sub-expressions corresponding to the plurality of sub-data blocks, to obtain a solving result of the mathematical model expression.

12. The apparatus according to claim 11, wherein the processing module is further configured to: convert the mathematical model expression into a form of a mathematical model expression tree; determine that the mathematical model expression tree comprises at least one first structure, to determine that the mathematical model expression has a nested structure, wherein the first structure indicates a structure of a mathematical model expression corresponding to the nested structure; perform expression expansion on the mathematical model expression, to obtain an expanded model expression; and substitute the instance data into the expanded mathematical model expression, to obtain the original data block of the mathematical model expression.

13. The apparatus according to claim 12, wherein the processing module is further configured to transform the first structure in the mathematical model expression tree according to a specified rule, to obtain a transformed model expression tree, wherein the transformed model expression tree is a model expression tree corresponding to the expanded mathematical model expression; and the specified rule is to replace the first structure with a second structure, and the second structure indicates a structure of a mathematical model expression corresponding to an expanded structure of the nested structure.

14. The apparatus according to any one of claims 11 to 13, wherein the data feature comprises sparsity, and the apparatus further comprises:

a determining module, configured to determine the similarity threshold, wherein the similarity threshold indicates a similarity among the plurality of sub-data blocks in sparsity; and
the processing module is further configured to uniformly segment the original data block into the plurality of sub-data blocks based on the similarity threshold, wherein the similarity among the plurality of sub-data blocks in sparsity meets the similarity threshold.

15. The apparatus according to claim 14, wherein the determining module is further configured to input the data features into an optimal threshold selection model, and obtain the similarity threshold outputted by the optimal threshold selection model; or receive the similarity threshold inputted by a user.

16. The apparatus according to claim 15, wherein the optimal threshold selection model is a neural network model trained by using a data feature of a sample data block and a similarity threshold label, the data feature of the sample data block comprises sparsity of the sample data block, and the similarity threshold label is a manually labeled similarity threshold for the sample data block.

17. The apparatus according to any one of claims 11 to 16, wherein the processing module is further configured to: convert the original data block into a sparse matrix format COO, to obtain a format-converted original data block; and segment the format-converted original data block into the plurality of sub-data blocks.

18. The apparatus according to any one of claims 11 to 17, wherein the generating module is further configured to: allocate the plurality of sub-data blocks to the plurality of threads for parallel processing, to generate sub-constraint blocks, wherein the sub-constraint blocks indicate mapping relationships between the sub-data blocks and sub-expressions as constraints in the mathematical model expression and/or mapping relationships between the sub-data blocks and sub-expressions as target functions in the digital model expression; and splice the sub-constraint blocks to generate the solver file.

19. The apparatus according to any one of claims 11 to 18, wherein the data feature comprises one of the following: sparsity, a proportion of non-zero elements, a quantity of non-zero elements, a quantity of zero elements, a matrix variance, and a word-embedding mapping value.

20. The apparatus according to any one of claims 11 to 19, wherein the mathematical model expression is used for solving one of a factory scheduling problem, a supply-demand simulation problem, and an energy scheduling problem, the instance data is instance data of one of the factory scheduling problem, the supply-demand simulation problem, and the energy scheduling problem, and the solving result is used for guiding resolution of one of the factory scheduling problem, the supply-demand simulation problem, and the energy scheduling problem.

21. A computing device cluster, comprising at least one computing device, wherein each computing device comprises a processor and a storage, and the processor of the at least one computing device is configured to execute instructions stored in the storage of the at least one computing device, to cause the computing device cluster to perform the data processing method according to any one of claims 1 to 10.

22. A computer-readable storage medium, comprising computer program instructions, wherein when the computer program instructions are executed by a computing device cluster, the computing device cluster performs the data processing method according to any one of claims 1 to 10.

23. A computer program product, wherein the computer program product comprises instructions, and when the instructions are run by a computing device cluster, the computing device cluster is caused to perform the data processing method according to any one of claims 1 to 10.

FIG. 1

FIG. 2

S101: A computing device obtains a mathematical model expression

S102: The computing device obtains an instance data file of parameters

S103: The computing device converts the mathematical model expression and instance data into an original data block

S104: The computing device segments the original data block into a plurality of sub-data blocks

S105: The computing device allocates the plurality of sub-data blocks to a plurality of threads for parallel processing, to generate a solving file

S11: The computing device determines whether the mathematical model expression has a nested structure

S12: If determining that the mathematical model expression has the nested structure, the computing device performs expression expansion on the mathematical model expression to obtain an expanded model expression

S13: The computing device substitutes the instance data into the expanded mathematical model expression, to obtain the original data block of the mathematical model expression

FIG. 3

FIG. 4

FIG. 5

FIG. 6

Data processing apparatus 500

Obtaining module ⎯510

Processing module ⎯520

Segmenting module ⎯530

Generating module ⎯540

FIG. 7

Processor 104

Communication interface 108

Bus 102

Storage 106

Obtaining module 510

Segmenting module 530

Processing module 520

Generating module 540

Computing device 100

FIG. 8

Processor 104

Communication interface 108

Bus 102

Storage 106

Obtaining module 510

Segmenting module 530

Processing module 520

Generating module 540

Computing device 100

FIG. 9

Processor
104

Communication
interface 108

Bus 102

Storage 106

Obtaining
module 510

Computing device 100A

Network

Communication
interface 108

Processor
104

Bus
102

Storage 106

Processing
module 520

Segmenting
module 530

Generating
module 540

Computing device 100B

FIG. 10

## INTERNATIONAL SEARCH REPORT

| International application No. |
|---|
| **PCT/CN2024/077526** |

| A. | CLASSIFICATION OF SUBJECT MATTER |
|---|---|

G06F9/50(2006.01)i

According to International Patent Classification (IPC) or to both national classification and IPC

| B. | FIELDS SEARCHED |
|---|---|

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS, CNTXT, ENTXTC, DWPI, ENTXT, CNKI: 规划求解, 数学模型, 约束, 数据块, 矩阵, 分割, 切分, 分区, 相似度, 均匀度, 稀疏度, 任务, 资源, 线程, 分配, solve, math+ model, constraint, data block, matrix, segment+, part+, divid+, similar +, uniform+, spars+, task, source, thread, distribut+, allocat+

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 115220882 A (HUAWEI TECHNOLOGIES CO., LTD.) 21 October 2022 (2022-10-21) entire document | 1-23 |
| A | CN 113986544 A (SHENZHEN UNIVERSITY) 28 January 2022 (2022-01-28) entire document | 1-23 |
| A | US 2022343145 A1 (ALIBABA SINGAPORE HOLDING PRIVATE LTD.) 27 October 2022 (2022-10-27) entire document | 1-23 |
| A | CN 108268424 A (INTEL CORP.) 10 July 2018 (2018-07-10) entire document | 1-23 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 March 2024** | **28 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/077526**

| Patent document cited in search report | | | Publication date (day/month/year) | Patent family member(s) | | | Publication date (day/month/year) |
|---|---|---|---|---|---|---|---|
| CN | 115220882 | A | 21 October 2022 | WO | 2022222834 | A1 | 27 October 2022 |
| | | | | EP | 4310676 | A1 | 24 January 2024 |
| | | | | US | 2024046168 | A1 | 08 February 2024 |
| CN | 113986544 | A | 28 January 2022 | CN | 113986544 | B | 07 June 2022 |
| US | 2022343145 | A1 | 27 October 2022 | WO | 2022223051 | A1 | 27 October 2022 |
| | | | | CN | 17203628 | A | 08 December 2023 |
| CN | 108268424 | A | 10 July 2018 | US | 2018189239 | A1 | 05 July 2018 |
| | | | | US | 10180928 | B2 | 15 January 2019 |
| | | | | EP | 3343391 | A1 | 04 July 2018 |

Form PCT/ISA/210 (patent family annex) (July 2022)